# EUROPEAN PATENT SPECIFICATION

(11) **EP 3 924 853 B1**
(45) Date of publication and mention of the grant of the patent: **08.04.2026**
(21) Application number: 20703774.8
(22) Date of filing: 14.02.2020
(51) Int. Cl.: G06F 21/60, H04L 9/00, H04L 9/32, G06N 20/00

(54) **METHOD FOR IMPROVING BLOCKCHAIN APPLICATIONS**
VERFAHREN ZUR VERBESSERUNG VON BLOCKCHAIN-ANWENDUNGEN
PROCÉDÉ D'AMÉLIORATION D'APPLICATIONS DE CHAÎNE DE BLOCS

(30) Priority: 14.02.2019 LU 101121
(43) Date of publication of application: 22.12.2021
(73) Proprietor: Luxembourg Institute of Science and Technology (LIST), 4362 Esch-sur-Alzette (LU)
(72) Inventor: KHADRAOUI, Djamel, 57180 Terville (FR); GRANDJEAN, Thierry, 6630 Martelange (BE); BOUJELBENE, Melek, route El-Ain Sfax, 3042 (TN); IMERI, Adnan, 42000 (RS)
(74) Representative: Ipsilon Luxembourg
(86) International application number: PCT/EP2020/053830
(87) International publication number: WO 2020/165382

(56) References cited:
- US-B1- 9 626 710
- JUNG GUEYOUNG ET AL: "CloudAdvisor: A Recommendation-as-a-Service Platform for Cloud Configuration and Pricing", 2013 IEEE NINTH WORLD CONGRESS ON SERVICES, IEEE, 28 June 2013 (2013-06-28), pages 456 - 463, XP032520949, DOI: 10.1109/SERVICES.2013.55
- ANONYMOUS: "Blockchain Performance, Throughput and Scalability | HIMSS", 28 January 2019 (2019-01-28), XP055680574, Retrieved from the Internet <URL:https://www.himss.org/blockchain-performance-throughput-and-scalability> [retrieved on 20200327]
- ANONYMOUS: "Consensus - Bitcoin Wiki", 28 May 2016 (2016-05-28), XP055680576, Retrieved from the Internet <URL:https://en.bitcoin.it/w/index.php?title=Consensus&oldid=61106> [retrieved on 20200327]
- ANONYMOUS: "bitcoin/consensus.h at master . bitcoin/bitcoin . GitHub", 27 July 2018 (2018-07-27), XP055680577, Retrieved from the Internet <URL:https://github.com/bitcoin/bitcoin/blob/master/src/consensus/consensus.h> [retrieved on 20200327]

## Description

### Technical field

The invention lies in the field of computer science, and deals in particular with improving the interactions between a computing system and a blockchain network.

### Background of the invention

The term Blockchain, or Blockchain technology, relates to a decentralized distributed database, hosted on a plurality of computing nodes in a communication network, the nodes being connected via data communication channels, for example via the public Internet. A Blockchain enables storing digital data originating at different computing devices or computing nodes in the network. The plurality of nodes that host the decentralized distributed database is referred to collectively as the Blockchain network. Nodes in the Blockchain network generally operate in a peer-to-peer mode of communication. The nodes rely on each other, instead of relying on a central authority to manage the distributed database they keep. A distributed consensus algorithm, which is one of the defining features of a particular Blockchain technology, is used to validate a set of data or transactions grouped in blocks. Once validated, the block is appended to the Blockchain and all nodes receive a copy of the new block. All blocks in the Blockchain are cryptographically linked together by following an ordering rule according to which each new block contains a hash address of previous blocks. A hash is a short cryptographical digest of a potentially large amount of data, which has the property of being unique: changing any portion of the initial data changes the hash value in an unpredictable way. Several cryptographically secure hash functions are known and well documented in the state of the art. Through this mechanism, data in a block of a Blockchain cannot be deleted or manipulated without changing all remaining blocks of the Blockchain at the same time. Blockchain technology provides a secure and tamper resistant distributed storage and transaction registry.

Several Blockchain technologies have been proposed in the literature following the seminal Bitcoin paper of Nakamoto in 2008 (Nakamoto, S., 2008. Bitcoin: A peer-to-peer electronic cash system). These technologies each have their own advantages and disadvantages, which relate to the consensus algorithm they rely on, the amount of computer resources they require at each participating node, and others. Other discerning features include the block sizes and the richness of interaction capabilities with the blockchain that is kept by the blockchain network. It is therefore difficult to provide an optimal Blockchain technology for any given application. This is even more difficult as Blockchain technologies evolve and may perform differently given different sizes of the underlying Blockchain network. A computing system that comes to rely on the distributed storage and ledger functionalities of a Blockchain network may therefore experience different performance from a given Blockchain technology if its requirements change, or if the underlying Blockchain technology evolves. This results in an overall degradation of performance, in a waste of computing resources and energy, as well as time.

The paper "CloudAdvisor: A Recommendation-as-a-Service Platform for Cloud Configuration and Pricing" (DOI 10.1109/SERVICES.2013.55) and the patent US 9626710 B1 are further prior art.

### Technical problem to be solved

It is an objective to present method and device, which overcome at least some of the disadvantages of the prior art.

### Summary of the invention

The present invention is defined by the appended independent claims. Preferred embodiments are set forth in the dependent claims.

In accordance with a first aspect of the invention, a method for improving the performance of a computing system that interacts with a blockchain network is provided. The computing system comprising a blockchain interface having a first configuration for writing and/or reading data from/to a first blockchain network. The method is remarkable in that it comprises the following steps:
a) providing data describing requirements of the computing system in a memory element;
b) providing data describing a plurality of blockchain networks including said first blockchain network in a memory element, said data comprising an indication of performance of each blockchain network in fulfilling said requirements;
c) using selection means, selecting from said plurality of blockchain networks, and based on said indication of performance, a blockchain network, or a combination of blockchain networks, that is expected to fulfil at least part of said requirements of the computing system;
d) using interface configuration means, changing the first configuration of the blockchain interface into a second configuration, for writing and/or reading data from/to said selected blockchain network or combination of blockchain networks.

The indication of performance may preferably comprise any of a time to reach consensus, a maximum block size, or a number of transactions that may be recorded per second.

Preferably, the plurality of blockchain networks may comprise at least one available blockchain network, and at least one obtainable blockchain network corresponding to a reconfiguration of an available blockchain network, or of a set of available computing resources. An obtainable blockchain network may preferably correspond to a transformation of an available blockchain network, or to a configuration of a set of available computing resources into a blockchain network.

Preferably at least part of the plurality of blockchain networks may rely on different blockchain technologies, may use different computing and/or communication resources, may implement different distributed consensus algorithms, may provide different application programming interfaces, or any combinations thereof.

An available blockchain network may preferably be ready for the computing system to write/read data from it, if the computing system is aptly configured therefor. An obtainable blockchain network may beforehand be configured based on an available blockchain network or based on available computing resources, prior to being available for the computing system to write/read data from it, if the computing system is aptly configured therefor.

Preferably, at least one of the following features of an available blockchain network may be reconfigured through automated scripting: the number of nodes, the available computing power of nodes, or the consensus algorithm.

Preferably, the available computing resources may be expressed in available computing cycles, available data communication bandwidth or amount of memory, and the reconfiguration may comprise using a generated script for instantiating a plurality of blockchain network nodes, for example through the creation of virtual machines, based on said available computing resources.

Preferably, if during said selection step, one of the obtainable blockchain networks is selected by the selection means, the method may further preferably comprise the step of reconfiguring the corresponding available blockchain network or said computing resources into said obtainable blockchain network using blockchain configuration means. Said reconfiguration may preferably comprise generating at least one corresponding script comprising reconfiguration instructions, which, when run by said corresponding available blockchain network, lead it to put into practice said obtainable blockchain network.

Alternatively, said reconfiguration step may comprise creating a copy of said corresponding available network, and reconfiguring said copy in order to put into practice said selected obtainable blockchain network.

Preferably, the data describing at least part of the blockchain networks of said plurality of blockchain networks may be fetched using data acquisition means from a node in a communication network.

The data describing at least part of the blockchain networks of said plurality of blockchain networks may preferably be obtained by querying said blockchain networks.

Preferably, the method may further comprise the step of copying or resubmitting any data previously recorded on said first blockchain network, to said selected blockchain network or combination of blockchain networks.

Said selections means may preferably comprise a decision tree data structure.

Said blockchain interface may preferably comprise an application programming interface for accessing a blockchain network.

Preferably, said data describing requirements of the computing system may comprise an indication of a number of users on the blockchain network, a minimum number of transactions per second to be supported, a reaction latency, a minimum network bandwidth, a requirement for user privacy or for supervision on the blockchain network, or any combination of the above.

The selection means, blockchain interface and interface configuration means, as well as the blockchain configuration means may preferably be realized using a programmable data processing unit, which is configured by corresponding software code to implement said functionalities in conjunction with a data communication/networking interface, memory element and other computing resources that are functionality interconnected, for example through use of a data bus.

Preferably, the data describing requirements of the computing system may depend on a software application that is being executed on said computing system.

According to another aspect of the invention, a computer network is provided. The computer network comprises a computing system having a blockchain interface for writing and/or reading data from/to a Blockchain network, at least one Blockchain network, and an interaction improvement node. The computer network is remarkable in that the interaction improvement node is configured to improve the interaction between said computing system and said Blockchain network in accordance with the method according to aspects of the invention.

Preferably, said computing system may comprise said interaction improvement node.

In accordance with a further aspect of the invention, a computing device is proposed. The computing device comprises a data processing unit and at least one memory element operatively connected to the data processing unit, wherein the data processing unit, wherein
- data describing requirements of a computing system is provided in a memory element;
- data describing a plurality of blockchain networks is provided in a memory element, said data comprising an indication of performance of each blockchain network in fulfilling said requirements;
- the data processing unit is configured to select, from said plurality of blockchain networks, and based on said indication of performance, a blockchain network, or a combination of blockchain networks, that is expected to fulfil at least part of said requirements of the computing system;
- the data processing unit is configured to change the configuration of said computing device for writing and/or reading data from/to said selected blockchain network or combination of blockchain networks.

The indication of performance may preferably comprise any of a time to reach consensus, a maximum block size, or a number of transactions that may be recorded per second, or a combination of the above.

Preferably, the data processing unit may further be configured to perform the method steps in accordance with methods in accordance with aspects of the invention.

In accordance with yet another aspect of the invention, a computer program comprising computer readable code means is provided, which when run on a computer, causes the computer to carry out the method according to aspects of the invention.

According to a final aspect of the invention, a computer program product comprising a computer-readable medium on which the computer program according to aspects of the invention is stored is provided.

By using the method in according with aspects of the invention, it becomes possible to automatically and dynamically match available blockchain technologies to the requirements faced by a computing system or computer program which needs to interact with a blockchain. While the performance of the computing system interacting with the blockchain technology is thereby improved, this is also true for the overall use of the available computing resources on which the corresponding blockchain networks are built.

### Brief description of the drawings

Several embodiments of the present invention are illustrated by way of figures, which do not limit the scope of the invention, wherein:
- figure 1 provides an overview of a Blockchain:
- figure 2 is a workflow diagram illustrating the main steps in accordance with a preferred embodiment of the invention;
- figure 3 is a schematic illustration of a system in which a preferred embodiment of the invention is used;
- figure 4 is a schematic illustration of a system in which a preferred embodiment of the invention is used.

### Detailed description of the invention

This section describes aspects of the invention in further detail based on preferred embodiments and on the figures. The figures do not limit the scope of the invention. Unless otherwise stated, similar concepts are referenced by similar numerals across embodiments. For example, references 100 and 200 each refer to a computer network, in accordance with a first and second embodiment of the invention.

Throughout the description, and unless otherwise specified, the following terminology will be adhered to.

A *computing system* describes a computer, smartphone, a set of computers connected using data communication channels or a virtual machine acting as a distinct entity. Any computing system comprises a data processor, at least one memory element and connectors, such as a data bus that allows instructions stored in the memory element to be read by the data processor, and outputs from the data processor to be stored in the memory element. The memory element may be a hard disk drive, a random-access memory, RAM, element, or a solid-state drive, SSD, for example. The computing system further comprises a networking interface that enables it to transmit and receive data from remotely connected computing devices, networks, servers or memory devices. A computing system may also comprise human-machine interfaces such as a keyboard, pointing device, audio interface and a display and/or touchscreen.

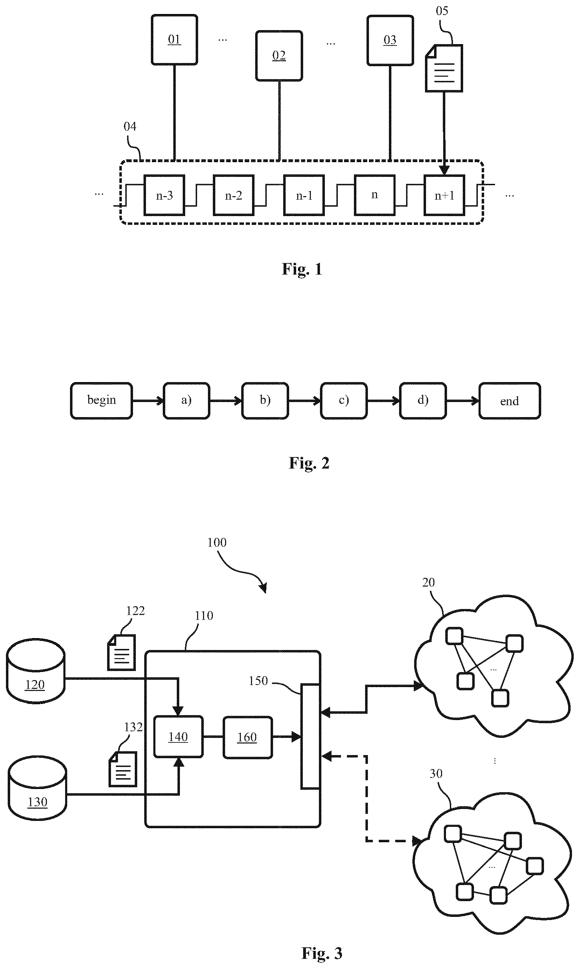

A *Blockchain network* describes a communication network comprised of communication nodes that participate in maintaining a blockchain. Figure 1 illustrates an example of a blockchain 04, as known in the art. In the illustrated example, the blockchain 04 is made up of blocks n-3, .. , n+1. The computing nodes 01, 02, 03 each hold a copy of the blockchain 04. These nodes are part of the blockchain network. Other architectures may exist and the figure is provided for the sake of illustration only.

The term "block", presents a data structure which is composed of several components: a timestamp, which indicates the time at which the block has been created (i.e., appended to the blockchain); a previous hash comprising the hash value from the previous block, e.g. the block n contains the hash from the header of block n-1; a nonce value generated by a consensus algorithm; a transaction root describing the root of all transactions received from the nodes in the network for a determined timestamp. These transactions are organized in the tree by using the Merkle Tree (https://github.com/ethereum/wiki/wiki/White-Paper#merkle-trees). Some features/parameters of a Blockchain technology are:
- *Decentralized:* Blockchain technology relies on a peer-to-peer mode of communication. It does not have any central authority for storing and retrieving data;
- *Consensus Algorithm*: the consensus refers the agreement of nodes in sharing content. There are different consensus algorithms implemented by different Blockchains: Proof of Work (PoW), Proof of Stake (PoS), Practical Byzantine fault tolerance) PBFT. These are well known in the art;
- *Data Security:* The data stored in the blockchain are cryptographically checked. The blockchain technology uses the digital signature (public key cryptography), for signing and verifying transactions;
- *Data Immutability:* The data recorded on blockchain are cryptographically checked and distributed over all nodes in the network. For changing any transaction in the blockchain, the user should change all transactions at the same time in all nodes in the network. **In** practice this is impossible as the consensus algorithm compares the hash root of transaction and denies these changes. Therefore, transactions recorded in blockchain cannot be altered or deleted.
- *Auditability:* The timestamp of transaction validation enables any user to trace the previous transaction executed by a specific user;
- *Smart Contracts:* A computer code deployed on the blockchain for performing specific tasks after some predefined condition are fulfilled. A suitable mechanism for data processing and management of processes in the supply chain, business contractual implementation. In the example of figure 1, a smart contract 05 is deployed on the blockchain 04;
- *Process automation:* The usability of the smart contracts and their ability for self-execution when the specific condition is fulfilled, presents one of the main features for automation of processes, for example in the area of supply chain management.
- *Interoperability:* The core component of blockchain technology enables many parties to access the blockchain under pre-defined conditions.
- *Low-cost maintenance:* The blockchain technology does not use any central authority for exchanging messages and validation of transactions. This enables low-cost operation by using the blockchain since there is no need for developing server infrastructures for validation of transactions. Compared to traditional systems, which use central servers for message exchanges and validation, the cost of maintenance is reduced of maintenance;
- *Sustainability:* If several nodes fail or are disconnected, still the blockchain remains available on the remaining nodes and works properly. When the "offline" nodes come back on "online" mode, they receive the last state of the ledger.
- *Public blockchains:* In the public blockchain, the access is permission-less, and it is considered fully decentralized. Any end user can join the network, execute the transaction or explore the block of the transaction conducted by other end users. In other models a gatekeeping node or a set of gatekeeping nodes may have exclusive rights to interact with the blockchain network itself.
- *Consortium blockchain:* This type of blockchain is mainly used by organizations, and is considered partially decentralized. In this type of blockchain, pre-selected nodes provide the consensus, while the consortium majority should grant the access to the consortium blockchain network. For example, in a consortium composed of 20 organizations that host this type of blockchain, the consensus is achieved if 15 organizations sign the transaction.
- *Private blockchain:* In this type of blockchain the permission for writing transaction (adding new block on the chain) are granted to a host (private) organization. There are defined different levels of access rights for reading and writing data. For joining such a blockchain network, the access must be granted by the host of the network.

While most implementations of the Blockchain technology share the above features, their performance may be very different when used under a different set of circumstances, or when relying on different sets of computing resources. For a computing system that intends to rely on a Blockchain for recording data, it is therefore essential that the appropriate Blockchain technology, that is capable of fulfilling its requirement in a satisfactory way, is available and being used. While in what follows such requirements are linked to a computing system, one may equivalently think of the requirements being application-dependent. A given software application may require certain features. This is equivalent to the computing system centric view, as the computing system shares the requirements of the software application, once the latter is being executed on the former.

Figure 2 provides a workflow of the main steps in accordance with aspects of the invention. Figure 3 provides an illustration of a computer network 100 based on which a first preferred embodiment in accordance with the invention will now be described. A computing system 110 comprises a blockchain interface 150 that is configured for writing and/or reading data to the first blockchain network 20. This configuration of the blockchain interface 150 corresponds to a first configuration, which is illustrated by the solid double-headed arrow linking the blockchain interface 150 to the blockchain network 20. The blockchain interface comprises for example a script through which a software application that is executed by the computing system 110 accedes to the blockchain 30. Each known blockchain technology can be accessed through appropriate Application Programming Interface, API, calls or indeed through scripts. These provide a blockchain interface, for interacting with the chosen blockchain network. Implementing a blockchain interface may comprise coding calls to a blockchain API, writing scripts that will be either compiled or interpreted into call to the blockchain API, or providing an API that manages the scripts that are used to configure the blockchain technology. The scripts are interpreted by the blockchain network, which translates the scripted instructions into actions. In practice, the interface between the computing system 110 and the first blockchain 20 may for example be limited to a line of code, and possibly to an instructions script. A computer program for identifying the corresponding line of code or the corresponding script can be implemented using appropriate text parsing means, as known in the art.

The computing system has access to a memory element 120 in which data 122 describing requirements of the computing system, with respect to the interactions with the blockchain technology, are provided. The corresponding data 122 may for example have been pre-provided by a user of the computing system. Alternatively, a computer software or machine learning algorithm may have inferred the corresponding data from the observed behaviour and/or use that is made of the computing system 110 in conjunction with the blockchain technology. The data 122 describing requirements of the computing system may for example include, without being limited to, information as to whether the application intends to store privacy sensitive information on the blockchain, whether a public or supervised blockchain is required, the number of users that need to be able to access the blockchain, the total number of expected transactions per second, the latency of the blockchain in order to record a transaction, or the used network bandwidth. While the memory element 120 is depicted as being a database, any data storage means may be used. Further the memory element 120 may be integrated into the computing device 110, or it may be a remote element, to which the computing system has access by means of a data communication channel.

The computing system 110 further has access to a memory element 130 in which data 132 describing a plurality of blockchain networks 20, 30, are provided. The blockchain networks 20, 30 may for example differ in their respective consensus algorithms, in their available computing or communication resources, in the blockchain technology (e.g. Ethereum, Corda or others) they rely on, or in any other feature. The data 132 comprises an indication of performance of each blockchain network 20, 30, in fulfilling the computing system's requirements 122. The corresponding data 132 may for example have been pre-provided by a user of the computing system. Alternatively, a computer software or machine learning algorithm may have inferred the corresponding data from the observed behaviour and/or use the blockchain networks 20, 30. Still further, the data 122 may have been fetched from a repository that describes available blockchain technologies. The data 132 describing the blockchains may for example include the type of blockchains (e.g., Blockchain network 20 may be described as an Ethereum chain) that are available, the used consensus algorithms, the number of nodes per blockchain network, the computing resources they rely on, etc... The indication of performance of each blockchain network may use any useful indication that can be measured and matched to the computing system's requirements 122. This relates performance metrics that depend on the used computing resources, such as network latency, or available memory, or indications that depend on the used blockchain technology scalability to a given number of users, public/supervised blockchain, and others. The indicators that relate to the blockchain technology are readily available by querying the blockchains directly. For example, for Ethereum the web3.js library is a collection of modules that contain specific functionalities to that effect. For Hyperledger, the project Hyperledger-Composer is providing the same kind of functionalities. For Bitcoin blockchain technology, an API bitcoin explorer is provided. For Ripple blockchain the Ripple DATA API is provided. The paper "A detailed and Real-time performance monitoring framework for Blockchain Systems" ICSE-SEIP ' 18 by Zheng et al. (ISBN 978-1-4503-5659-6/18/05) provides further performance indications which may be recorded in the data 132, including Transactions per Second, Average Response Delay, Transactions per CPU, Transactions per Memory Second, Transactions per I/O, and Transactions per Network Data. While the memory element 120 is depicted as being a database, any data storage means may be used. Further the memory element 130 may be integrated into the computing device 110, or it may be a remote element, to which the computing system has access by means of a data communication channel. Table I provides a nonlimiting example of data 132 as it may be stored in the memory element 130, for five different available blockchain network, each relying on a different blockchain technology.

**TABLE I: description data for six different blockchain networks**

| | **Ethereum** | **Fabric** | **Parity** | **Corda** | **IOTA** | **Quorum** |
|---|---|---|---|---|---|---|
| **Transaction per second (TPS)** | ~ 200 tps | >2000 tps | ~140 tps | ~ 170 tps | 13-1500 tps | A few 100s |
| **Latency (200 requests)** | ~ 100 seconds | ~ 120 seconds | ~13 seconds | ~ 80 seconds | -- | ~3 seconds |
| **Mean CPU utilization (8 X 3.5GHz CPU, 32GB RAM, 2TB hard drive)** | ~75% | ~8% | ~10% | -- | -- | -- |
| **Mean network utilization** | ~3 Mbps | ~25 Mbps | ~ 2 Mbps | -- | -- | -- |
| **Peak Memory usage (1 MB input)** | ~ 4000 MB | ~ 350 MB | ~700 MB | -- | -- | -- |
| **Disk usage (1 MB tuple)** | ~2500 MB | ~360 MB | ~2000 MB | -- | -- | -- |
| **Execution Time (1 MB input)** | ~ 100 sec | ~0.19 sec | ~3 sec | -- | -- | -- |
| **Blocks generated (in 100 sec)** | ~ 60 blocs | ~ 250 blocs | ~ 80 blocs | -- | -- | -- |
| **Queue Length (in 300 sec for 20 clients and 20 servers)** | ~60 000 | ~70 000 | ~10 000 | -- | -- | -- |
| **Energy consumption** | high | low | low | -- | -- | -- |
| **Blocks processed (in 100 sec)** | ~8 blocks | -- | ~ 100 blocks | -- | -- | -- |

The computing system 110 comprises selection means 140, which are for example provided by an appropriately configured data processing unit, and which, based on data 122 and 132 as input, select a blockchain network from said plurality of blockchain network 20, 30, which partially or entirely fulfils the requirements 122.

If the selected blockchain network differs from the first blockchain network 20 that the computing system interacted with, the configuration means 160 change the first configuration of the blockchain interface 150 into a second configuration, according to which the computing system 110 will interact with the selected blockchain network 30 instead of the original blockchain network 20. The resulting second configuration is illustrated by the dashed double-headed arrow linking the blockchain interface 150 to the selected blockchain network 30. The configuration means 160 comprise for example a computer program that modifies the code lines or scripts that implement the blockchain interface 150 so as to invoke the selected blockchain network 30 instead of the originally used blockchain network 20. The corresponding parts of code and/or scripts may for example be provided in a database or look-up table to which the computer program has access.

By performing this method, corresponding essentially to steps a)-d) of the method of the invention, the performance of the computing system 110 is improved by changing the interaction with blockchain 20 to the interaction with blockchain 30, which provides a closer matched performance with respect to the computing systems' requirements. It is to be noted that the content of memory element 130 may be periodically and dynamically updated with information relating to newly available blockchain networks, or in case an existing blockchain network's performance have evolved. By applying the method steps based on different data 132, the result may become different, thereby ensuring a continuously optimal use of the available blockchain networks.

While in the example of figure 3, the method is essentially run by the computing system 110 that also interacts with the blockchain network, in an alternative embodiment, the method may be run on a distinct network node or distinct computing system, which has remote access to the computing system 110 via an appropriate data communication channel. The remote access allows the node to reconfigure the computing system's 110 blockchain interface after a blockchain network has been selected. Such a node is referred to as an interaction improvement node, and it implements the selection means instead of the computing system 110, as it has access to the memory elements 120 and 130, instead of the computing system. To summarize, the interaction improvement node may be a distinct node from the computer that runs an application interacting with the blockchain network 20, and of which the configuration is changed by the described method. Alternatively, in a different embodiment, the interaction improvement node may be the same computing system that is also running the application that interacts with the blockchain network 20.

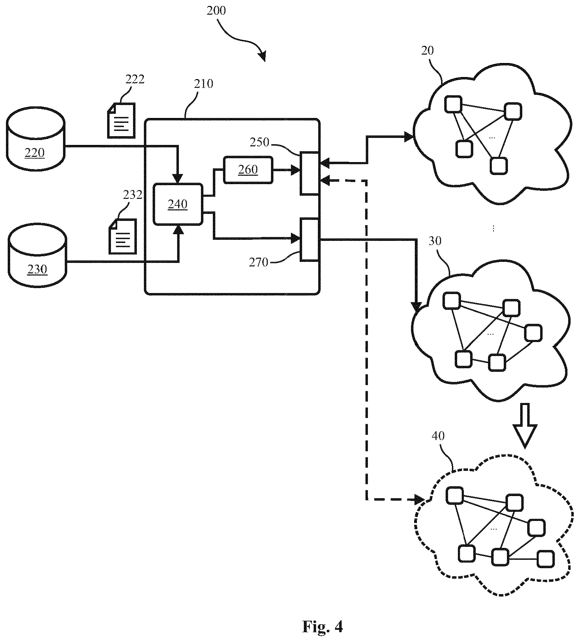

Figure 4 illustrates another preferred embodiment of a computer network 200 in accordance with the invention. Features that are not explicitly mentioned are similar to the corresponding features of the previous embodiment that has been described with reference to figure 3. A computing system 210 comprises a blockchain interface 250 that is configured for writing and/or reading data to the first blockchain network 20. This configuration of the blockchain interface 250 corresponds to a first configuration, which is illustrated by the solid double-headed arrow linking the blockchain interface 250 to the blockchain network 20.

The computing system has access to a memory element 220 in which data 222 describing requirements of the computing system, with respect to the interactions with the blockchain technology, are provided. The computing system 210 further has access to a memory element 230 in which data 232 describing a plurality of blockchain networks 20, 30, and 40 are provided. The plurality of blockchain networks may of course be much larger in practice, without departing from the scope of the invention. The data 232 comprises an indication of performance of each blockchain network 20, 30, 40 in fulfilling the computing system's requirements 222. The data 232 describing the blockchains may for example include the type of blockchains (e.g., Blockchain network 20 may be described as an Ethereum chain) that are available, the used consensus algorithms, the number of nodes per blockchain network, the computing resources they rely on, etc... In addition to the physically available and ready-to-use blockchain networks, illustrated by blockchain networks 20 and 30, the blockchain networks identified by the data 232 further comprise obtainable blockchain networks, such as blockchain network 40, which is not physically available as yet, but which may be made available by appropriate reconfiguration of the existing and available blockchain network 30. The blockchain network 40 is obtainable through a transformation (e.g., adding a computing node to the network) of the available blockchain network 30. The obtainable network 40 is equally described together with an expected performance in fulfilling the requirements as set out by the data 222. In accordance with a preferred embodiment, the computing system may simulate the performance of an obtainable blockchain network depending on different transformations of the corresponding available blockchain network 30, e.g. by adding, one, five, ten or more nodes to the existing infrastructure, and evaluating the performance for each of these individually obtainable blockchain networks. This enables the system to provide the transform that will result in the blockchain network that will best match the requirements of the computing system.

The computing system 210 comprises selection means 240, which are for example provided by an appropriately configured data processing unit, and which, based on data 222 and 232 as input, select a blockchain network from said plurality of blockchain network 20, 30, 40, which partially or entirely fulfils the requirements 222.

If the selected blockchain network is an available blockchain network, for example blockchain network 30, that differs from the first blockchain network 20 that the computing system interacted with, the configuration means 260 change the first configuration of the blockchain interface 250 into a second configuration, according to which the computing system 210 will interact with the selected blockchain network 30 instead of the original blockchain network 20. This situation is not illustrated by figure 4. If the selected blockchain network is an obtainable blockchain network, for example blockchain network 40 as illustrated by figure 4. the blockchain configuration means 270 first reconfigure the corresponding available blockchain network 30 so that it becomes the obtainable blockchain network 40 (for example by adding nodes through appropriate scripting). Once the new configuration is confirmed by the corresponding blockchain network, the configuration means 260 then proceed with changing the first configuration of the blockchain interface 250 into a second configuration, according to which the computing system 210 will interact with the selected blockchain network 40 instead of the original blockchain network 20. The resulting second configuration is illustrated by the dashed double-headed arrow linking the blockchain interface 250 to the selected and newly configured blockchain network 40. The newly available blockchain network 40 is marked as such in the datastore 230. In an even more preferably embodiment, the original corresponding blockchain network 30 is first copied, and the copy is reconfigured into blockchain network 40. This provides the advantage that the originally available blockchain network 30 remains available for other computing systems and/or applications.

According to yet another embodiment, the set of blockchain networks may also comprise a blockchain network that must first be generated through appropriate scripting instructions. For example, a set of computing resources may be available for configuring them into a set of virtual nodes making up a new blockchain network. In all of these instances, the corresponding parts of code and/or scripts may for example be provided in a database or look-up table to which the computer program that implements the blockchain configuration means has access.

In all previous embodiments, the data describing the blockchain networks and their respective performance 132,242 may further be enriched by more complex options, in accordance to which the best performance for a given set of requirements 122, 222 may for example be provided by using a first blockchain network for a first subset of data, and a second blockchain network for a second subset of data. Other combinations of available and/or obtainable blockchain networks may of course also be possible, extending to combinations of more than two blockchain networks. Advantageously, at least some of the blockchain networks involved in such a combination may rely on different blockchain technologies, i.e. Ethereum and Bitcoin, without the invention being limited thereto. Should such a combination be selected by the selection means 140, 250, the blockchain interface 150, 250 is in that case further reconfigured accordingly by the interface configuration means 160, 260, following the same principles as described here above.

In all previous embodiments, the selection means 140, 240 may be realized in multiple possible ways. For example, an exhaustive search algorithm may be used to compute, possible offline, all performance metrics of any available blockchain networks at a given time. The results may be stored in a lookup table and updated periodically as the configuration of the blockchain network evolves or as new blockchain technologies become available. A set of requirements 122, 222 may then be matched against all possible results and a decision metric (for example a known thresholding algorithm) may be used to select a blockchain network. Alternatively, a binary decision tree may be created based on the description of the available blockchain networks 132, 232 and stored in a memory element to which the selection means have access. By sequentially following the decision tree, a single blockchain network may be selected for a given set of requirements 122, 222. The nodes of the decision tree may for example be structured as: need for public blockchain? nee for latency < 130s, etc. While the decision tree may be pre-provided by a user of the computing system, it may also be dynamically created or updated by a machine learning algorithm.

In all previous embodiments, the selection means may be configured to estimate the performance of an available or obtainable blockchain network by estimating for example the time to reach consensus, given a number of transaction and/or a predetermined block size. This is achieved by taking into account parameters comprising the size of the blockchain, the block size, and the number of peer nodes in the Blockchain network. The If the estimated time to reach consensus of a given blockchain network is longer than a predetermined threshold duration value, the consensus algorithm may be changed through a reconfiguration of the blockchain network, or by selecting a blockchain network providing a lower estimated consensus time. Alternatively, the block size or the number of transactions to be recorded per block may be decreased.

In all previous embodiments, when the used blockchain network is changed by the selection means from a first blockchain network 20, to a second blockchain network 30 or 40, the content that the computing system 110, 210 had already stored on the first blockchain network 20 may preferably be replicated on, or migrated to the second blockchain network 30 or 40. This may be achieved by retrieving all transactions from the first blockchain network to a local data store, and to re-submit the corresponding transaction to the second blockchain network 30 or 40, which has been selected. This provides the advantage of ensuring data consistency throughout blockchain migrations. The first and second blockchain networks will not be identical, as for example any timestamps, hashes etc... will differ. However, they will comprise records of the same data (for example transactions). In that sense the second blockchain will be a copy of the first blockchain.

It should be noted that features described for a specific embodiment described herein may be combined with the features of other embodiments unless the contrary is explicitly mentioned. Based on the description and figures that has been provided, a person with ordinary skills in the art will be enabled to develop a computer program for implementing the described methods without undue burden.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A method for improving the performance of a computing system (110, 210) that interacts with a blockchain network (20), the computing system comprising a blockchain interface(150, 250) having a first configuration for writing and/or reading data from/to a first blockchain network, the method comprising the following steps:
a) providing data (122, 222) describing requirements of the computing system in a memory element (120, 220);
b) providing data (132, 232) describing a plurality of blockchain networks (20, 30, 40) including said first blockchain network in a memory element (130, 230), said data comprising an indication of performance of each blockchain network in fulfilling said requirements (122, 222), the indication of performance comprising a time to reach consensus, which is the agreement of nodes in the blockchain to share content;
c) using selection means (140, 240), selecting from said plurality of blockchain networks, and based on said indication of performance, a blockchain network, or a combination of blockchain networks, that is expected to fulfil at least part of said requirements of the computing system;
d) using interface configuration means (160, 260), changing the first configuration of the blockchain interface (150, 250) into a second configuration, for writing and/or reading data from/to said selected blockchain network or combination of blockchain networks.

2. The method according to claim 1, wherein the plurality of blockchain networks comprises at least one available blockchain network (30), and at least one obtainable blockchain network (40) that corresponds to a transformation of an available blockchain network (30) or to a configuration of a set of available computing resources into a blockchain network.

3. The method according to claim 2, wherein, if at said selection step one of the obtainable blockchain networks (40) is selected by the selection means (240), the method further comprises the step of reconfiguring the corresponding available blockchain network (30) or said computing resources into said obtainable blockchain network (40) using blockchain configuration means (270).

4. The method according to any of claims 1 to 3, wherein the data (132, 232) describing at least part of the blockchain networks of said plurality of blockchain networks is fetched using data acquisition means from a node in a communication network.

5. The method according to any of claims 1 to 4, wherein the data (132, 232) describing at least part of the blockchain networks of said plurality of blockchain networks is obtained by querying said blockchain networks.

6. The method according to any of claims 1 to 5, wherein the method comprises the further step of resubmitting any data previously recorded on said first blockchain network (20), to said selected blockchain network or combination of blockchain networks.

7. The method according to any of claims 1 to 6, wherein said selections means (140, 240) comprise a decision tree data structure.

8. The method according to any of claims 1 to 7, wherein said blockchain interface (150, 250) comprises an application programming interface for accessing a blockchain network.

9. The method according to any of claims 1 to 8, wherein said data (122, 222) describing requirements of the computing system comprises an indication of a number of users on the blockchain network, a minimum number of transactions per second to be supported, a reaction latency, a minimum network bandwidth, a requirement for user privacy or for supervision on the blockchain network, or any combination of the above.

10. The method according to any of claims 1 to 9, wherein the data (122, 222) describing requirements of the computing system depends on a software application that is being executed on said computing system.

11. A computer network (100, 200) comprising a computing system (110, 210) having a blockchain interface (150, 250) for writing and/or reading data from/to a Blockchain network (20), at least one Blockchain network (20), and an interaction improvement node, **characterized in that** the interaction improvement node is configured to improve the interaction between said computing system and said Blockchain network in accordance with the method of any of claims 1 to 10.

12. A computing device comprising a data processing unit and at least one memory element operatively connected to the data processing unit, wherein the data processing unit, wherein
- data describing requirements of a computing system is provided in a memory element;
- data describing a plurality of blockchain networks is provided in a memory element, said data comprising an indication of performance of each blockchain network in fulfilling said requirements, the indication of performance comprising a time to reach consensus, which is the agreement of nodes in the blockchain to share content, ;
- the data processing unit is configured to select, from said plurality of blockchain networks, and based on said indication of performance, a blockchain network, or a combination of blockchain networks, that is expected to fulfil at least part of said requirements of the computing system;
- the data processing unit is configured to change the configuration of said computing device for writing and/or reading data from/to said selected blockchain network or combination of blockchain networks.

13. The computing device according to claim 12, wherein the data processing unit is further configured to perform the method steps in accordance with any of claims 2 to 10.

14. A computer program comprising computer readable code means, which when **run** on a computer, causes the computer to carry out the method according to any of claims 1 to 10.

15. A computer program product comprising a computer-readable medium on which the computer program according to claim 14 is stored.

## Patentansprüche

1. Eine Methode zur Verbesserung der Leistung eines Rechensystems (110, 210), das mit einem Blockchain-Netzwerk (20) interagiert, wobei das Rechensystem eine Blockchain-Schnittstelle (150, 250) mit einer ersten Konfiguration zum Schreiben und/oder Lesen von Daten aus/in ein erstes Blockchain-Netzwerk umfasst, wobei die Methode die folgenden Schritte umfasst:
a) Bereitstellung in einem Speicherelement (120, 220) von Daten (122, 222) die Anforderungen des Rechensystems beschreiben;
b) Bereitstellung von Daten (132, 232) in einem Speicherelement (130, 230) die eine Vielzahl von Blockchain-Netzwerken (20, 30, 40) beschreiben, einschließlich des genannten ersten Blockchain-Netzwerks, wobei die Daten eine Angabe der Leistung jedes Blockchain-Netzwerks bei der Erfüllung der genannten Anforderungen (122, 222) umfassen, wobei die Angabe der Leistung eine Zeit zur Konsensfindung umfasst, bei der die Übereinstimmung der Knoten im Blockchain-Netzwerk zum Teilen von Inhalten erreicht wird;
c) unter Verwendung von Auswahlmitteln (140, 240), Auswahl aus der Vielzahl von Blockchain-Netzwerken und basierend auf der genannten Angabe der Leistung, eines Blockchain-Netzwerks oder einer Kombination von Blockchain-Netzwerken, die voraussichtlich mindestens einen Teil der genannten Anforderungen des Rechensystems erfüllen wird;
d) unter Verwendung von Schnittstellenkonfigurationsmitteln (160, 260), Ändern der ersten Konfiguration der Blockchain-Schnittstelle (150, 250) in eine zweite Konfiguration, zum Schreiben und/oder Lesen von Daten aus/in das ausgewählte Blockchain-Netzwerk oder die Kombination von Blockchain-Netzwerken.

2. Die Methode nach Anspruch 1, wobei die Vielzahl von Blockchain-Netzwerken mindestens ein verfügbares Blockchain-Netzwerk (30) und mindestens ein erhaltbares Blockchain-Netzwerk (40) umfasst, das einer Transformation eines verfügbaren Blockchain-Netzwerks (30) oder einer Konfiguration eines Satzes verfügbarer Rechnerressourcen in ein Blockchain-Netzwerk entspricht.

3. Die Methode nach Anspruch 2, wobei, falls in dem Auswahlschritt eines der erhaltbaren Blockchain-Netzwerke (40) von den Auswahlmitteln (240) ausgewählt wird, die Methode außerdem den Schritt umfasst, das entsprechende verfügbare Blockchain-Netzwerk (30) oder die genannten Rechnerressourcen in das genannte erhaltbare Blockchain-Netzwerk (40) unter Verwendung von Blockchain-Konfigurationsmitteln (270) umzukonfigurieren.

4. Die Methode nach einem der Ansprüche 1 bis 3, wobei die Daten (132, 232) zur Beschreibung von mindestens einem Teil der Blockchain-Netzwerke der genannten Vielzahl von Blockchain-Netzwerken unter Verwendung von Datenerfassungsmitteln von einem Knoten in einem Kommunikationsnetzwerk abgerufen werden.

5. Die Methode nach einem der Ansprüche 1 bis 4, wobei die Daten (132, 232) zur Beschreibung von mindestens einem Teil der Blockchain-Netzwerke der genannten Vielzahl von Blockchain-Netzwerken durch Abfragen der genannten Blockchain-Netzwerke gewonnen werden.

6. Die Methode nach einem der Ansprüche 1 bis 5, wobei die Methode den weiteren Schritt umfasst, alle zuvor auf dem genannten ersten Blockchain-Netzwerk (20) aufgezeichneten Daten, auf das ausgewählte Blockchain-Netzwerk oder die Kombination von Blockchain-Netzwerken erneut zu übertragen.

7. Die Methode nach einem der Ansprüche 1 bis 6, wobei die Auswahlmittel (140, 240) eine Entscheidungsbaum-Datenstruktur umfassen.

8. Die Methode nach einem der Ansprüche 1 bis 7, wobei die Blockchain-Schnittstelle (150, 250) eine Anwendungsprogrammierschnittstelle zum Zugriff auf ein Blockchain-Netzwerk umfasst.

9. Die Methode nach einem der Ansprüche 1 bis 8, wobei die Daten (122, 222) zur Beschreibung der Anforderungen des Rechensystems eine Angabe der Anzahl von Benutzern im Blockchain-Netzwerk, eine Mindestanzahl von Transaktionen pro Sekunde, die unterstützt werden muss, eine Reaktionslatenz, eine Mindestnetzwerkbandbreite, eine Anforderung an die Benutzerprivatsphäre oder die Überwachung im Blockchain-Netzwerk oder eine Kombination der oben genannten umfassen.

10. Die Methode nach einem der Ansprüche 1 bis 9, wobei die Daten (122, 222) zur Beschreibung der Anforderungen des Rechensystems von einer Softwareanwendung abhängen, die auf dem genannten Rechensystem ausgeführt wird.

11. Ein Computernetzwerk (100, 200), umfassend ein Rechensystem (110, 210) mit einer Blockchain-Schnittstelle (150, 250) zum Schreiben und/oder Lesen von Daten aus/in ein Blockchain-Netzwerk (20), mindestens ein Blockchain-Netzwerk (20) und einen Interaktionsverbesserungsknoten, **dadurch gekennzeichnet, dass** der Interaktionsverbesserungsknoten konfiguriert ist, die Interaktion zwischen dem genannten Rechensystem und dem genannten Blockchain-Netzwerk gemäß der Methode eines der Ansprüche 1 bis 10 zu verbessern.

12. Ein Rechengerät, umfassend eine Datenverarbeitungseinheit und mindestens ein Speicherelement, das betriebsfähig mit der Datenverarbeitungseinheit verbunden ist, wobei:
- Daten zur Beschreibung der Anforderungen eines Rechensystems in einem Speicherelement bereitgestellt sind;
- Daten zur Beschreibung einer Vielzahl von Blockchain-Netzwerken in einem Speicherelement bereitgestellt sind, wobei die Daten eine Angabe der Leistung jedes Blockchain-Netzwerks bei der Erfüllung der genannten Anforderungen umfassen, wobei die Angabe der Leistung eine Zeit zur Konsensfindung umfasst, bei der die Übereinstimmung der Knoten im Blockchain-Netzwerk zum Teilen von Inhalten erreicht wird;
- Die Datenverarbeitungseinheit dazu konfiguriert ist, aus der Vielzahl von Blockchain-Netzwerken und basierend auf der genannten Angabe der Leistung ein Blockchain-Netzwerk oder eine Kombination von Blockchain-Netzwerken auszuwählen, das/die voraussichtlich mindestens einen Teil der genannten Anforderungen des Rechensystems erfüllen wird;
- Die Datenverarbeitungseinheit dazu konfiguriert ist, die Konfiguration des genannten Rechengeräts zum Schreiben und/oder Lesen von Daten aus/in das ausgewählte Blockchain-Netzwerk oder die Kombination von Blockchain-Netzwerken zu ändern.

13. Das Rechengerät nach Anspruch 12, wobei die Datenverarbeitungseinheit zusätzlich konfiguriert ist, die Verfahrensschritte gemäß einem der Ansprüche 2 bis 10 auszuführen.

14. Ein Computerprogramm, umfassend computerlesbare Codemittel, das, wenn es auf einem Computer ausgeführt wird, den Computer veranlasst, die Methode gemäß einem der Ansprüche 1 bis 10 auszuführen.

15. Ein Computerprogrammprodukt, umfassend ein computerlesbares Medium, auf dem das Computerprogramm gemäß Anspruch 14 gespeichert ist.

## Revendications

1. Une méthode pour améliorer la performance d'un système informatique (110, 210) qui interagit avec un réseau blockchain (20), le système informatique comprenant une interface blockchain (150, 250) ayant une première configuration pour écrire et/ou lire des données vers/depuis un premier réseau blockchain, la méthode comprenant les étapes suivantes :
a) fournir des données (122, 222) décrivant les exigences du système informatique dans un élément de mémoire (120, 220) ;
b) fournir des données (132, 232) décrivant une pluralité de réseaux blockchain (20, 230, 40) incluant ledit premier réseau blockchain dans un élément de mémoire (130, 230), lesdites données comprenant une indication de performance de chaque réseau blockchain pour satisfaire lesdites exigences (122, 222), l'indication de performance comprenant un temps pour atteindre le consensus, qui est l'accord des nœuds dans la blockchain pour partager du contenu ;
c) en utilisant des moyens de sélection (140, 240), sélectionner parmi ladite pluralité de réseaux blockchain, et basé sur ladite indication de performance, un réseau blockchain, ou une combinaison de réseaux blockchain, qui est censé satisfaire au moins une partie desdites exigences du système informatique ;
d) en utilisant des moyens de configuration de l'interface (160, 260), changer la première configuration de l'interface blockchain (150, 250) en une deuxième configuration, pour écrire et/ou lire des données vers/depuis ledit réseau blockchain sélectionné ou la combinaison de réseaux blockchain.

2. La méthode selon la revendication 1, dans laquelle la pluralité de réseaux blockchain comprend au moins un réseau blockchain disponible (30), et au moins un réseau blockchain obtenable (40) correspondant à une transformation d'un réseau blockchain disponible (30) ou à une configuration d'un ensemble de ressources informatiques disponibles en un réseau blockchain.

3. La méthode selon la revendication 2, dans laquelle, si lors de ladite étape de sélection un des réseaux blockchain obtenables (40) est sélectionné par les moyens de sélection (240), la méthode comprend en outre l'étape de reconfigurer le réseau blockchain disponible correspondant (30) ou lesdites ressources informatiques en ledit réseau blockchain obtenable (40) en utilisant des moyens de configuration de blockchain (270).

4. La méthode selon l'une des revendications 1 à 3, dans laquelle les données (132, 232) décrivant au moins une partie des réseaux blockchain de ladite pluralité de réseaux blockchain sont récupérées en utilisant des moyens d'acquisition de données à partir d'un nœud dans un réseau de communication.

5. La méthode selon l'une des revendications 1 à 4, dans laquelle les données (132, 232) décrivant au moins une partie des réseaux blockchain de ladite pluralité de réseaux blockchain sont obtenues en interrogeant lesdits réseaux blockchain.

6. La méthode selon l'une des revendications 1 à 5, dans laquelle la méthode comprend l'étape supplémentaire de soumettre à nouveau toutes les données précédemment enregistrées sur ledit premier réseau blockchain (20) au réseau blockchain sélectionné ou à la combinaison de réseaux blockchain.

7. La méthode selon l'une des revendications 1 à 6, dans laquelle lesdits moyens de sélection (140, 240) comprennent une structure de données en arbre de décision.

8. La méthode selon l'une des revendications 1 à 7, dans laquelle ladite interface blockchain (150, 250) comprend une interface de programmation d'application pour accéder à un réseau blockchain.

9. La méthode selon l'une des revendications 1 à 8, dans laquelle lesdites données (122, 222) décrivant les exigences du système informatique comprennent une indication du nombre d'utilisateurs sur le réseau blockchain, un nombre minimum de transactions par seconde à prendre en charge, une latence de réaction, une bande passante minimale du réseau, une exigence de confidentialité des utilisateurs ou de supervision sur le réseau blockchain, ou toute combinaison des éléments ci-dessus.

10. La méthode selon l'une des revendications 1 à 9, dans laquelle les données (122, 222) décrivant les exigences du système informatique dépendent d'une application logiciel exécutée sur ledit système informatique.

11. Un réseau informatique (100, 200) comprenant un système informatique (110, 210) possédant une interface blockchain (150, 250) pour écrire et/ou lire des données vers/depuis un réseau blockchain (20), au moins un réseau blockchain (20), et un nœud d'amélioration de l'interaction, **caractérisé par le fait que** le nœud d'amélioration de l'interaction est configuré pour améliorer l'interaction entre ledit système informatique et ledit réseau blockchain conformément à la méthode de l'une des revendications 1 à 10.

12. Un dispositif informatique comprenant une unité de traitement de données et au moins un élément de mémoire connecté de façon opérative à l'unité de traitement de données, dans lequel :
- des données décrivant les exigences d'un système informatique sont fournies dans un élément de mémoire ;
- des données décrivant une pluralité de réseaux blockchain sont fournies dans un élément de mémoire, lesdites données comprenant une indication de performance de chaque réseau blockchain pour satisfaire lesdites exigences, l'indication de performance comprenant un temps pour atteindre le consensus, qui est l'accord des nœuds dans la blockchain pour partager le contenu ;
- l'unité de traitement de données est configurée pour sélectionner, parmi ladite pluralité de réseaux blockchain, et en fonction de ladite indication de performance, un réseau blockchain, ou une combinaison de réseaux blockchain, qui est censée satisfaire au moins une partie desdites exigences du système informatique ;
- l'unité de traitement de données est configurée pour changer la configuration dudit dispositif informatique pour écrire et/ou lire des données vers/depuis ledit réseau blockchain sélectionné ou la combinaison de réseaux blockchain.

13. Le dispositif informatique selon la revendication 12, dans lequel l'unité de traitement de données est en outre configurée pour exécuter les étapes de la méthode conformément à l'une des revendications 2 à 10.

14. Un programme informatique comprenant des moyens de code lisibles par ordinateur, qui, lorsqu'il est exécuté sur un ordinateur, amène l'ordinateur à exécuter la méthode selon l'une des revendications 1 à 10.

15. Un produit de programme informatique comprenant un support lisible par ordinateur sur lequel est enregistré le programme informatique selon la revendication 14.
